# EUROPÄISCHE PATENTSCHRIFT

(11) **EP 1 984 100 B1**
(45) Veröffentlichungstag und Bekanntmachung des Hinweises auf die Patenterteilung: **02.09.2015**
(21) Anmeldenummer: 07711567.3
(22) Anmeldetag: 17.02.2007
(51) Int. Cl.: B01D 65/02, B01D 63/08, B01D 65/08, B01D 71/02, C02F 3/08, C02F 3/10, C02F 3/12

(54) **REINIGUNGSVERFAHREN FÜR ABWÄSSER**
PURIFICATION METHOD FOR EFFLUENT
PROCÉDÉ D'ÉPURATION D'EAUX USÉES

(30) Priorität: 17.02.2006 DE 102006008453
(43) Veröffentlichungstag der Anmeldung: 29.10.2008
(73) Patentinhaber: ItN Nanovation AG, 66117 Saarbrücken (DE)
(72) Erfinder: BRAUN, Gerhard, 66117 Saarbrücken (DE); GABRIEL, Kay Gunther, 66121 Saarbrücken (DE)
(74) Vertreter: Patentanwälte Ruff, Wilhelm, Beier, Dauster & Partner
(86) Internationale Anmeldenummer: PCT/EP2007/001382
(87) Internationale Veröffentlichungsnummer: WO 2007/093440

(56) Entgegenhaltungen:
- EP-A- 1 034 835
- EP-A- 1 382 377
- EP-A1- 0 850 680
- EP-A1- 1 484 287
- EP-A2- 0 426 546
- WO-A-91/11396
- WO-A1-2004/071620
- DE-A1- 10 127 554
- DE-A1- 19 953 459
- DE-U1- 29 819 446
- DE-U1-202004 010 485
- JP-A- 4 176 327
- JP-A- 63 214 177
- JP-A- 2001 233 681
- US-A1- 2003 132 174
- KOPPE F ET AL: "VORTEILSPACKUNG. FLACHMEMBRANEN AUS TECHNISCHER KERAMIK FUER DIE QUERSTROMFILTRATION", CHEMIETECHNIK, HUTHIG, HEIDELBERG, DE, vol. 26, no. 9, 1 September 1997 (1997-09-01), page 52,55/56, XP000702543, ISSN: 0340-9961

## Beschreibung

Die vorliegende Erfindung betrifft eine Kläranlage zur Abwasserreinigung mit einer Filtrationseinrichtung sowie ein Verfahren zur Reinigung von Abwasser.

Neben Siebrechen und Absetzbecken, die in einem ersten Schritt Abwässer von Grobbestandteilen befreien, enthalten konventionelle Kläranlagen auch ein Belebungs- und ein Nachklärbecken. Im Belebungsbecken werden Mikroorganismen genutzt, um Fäkalien oder andere organische Stoffe zu zersetzen. Die eingesetzten Mikroorganismen werden im Anschluss an das Belebungsbecken im Nachklärbecken durch Sedimentation wieder vom Abwasser abgetrennt und z.T. in das Belebungsbecken zurückgeführt. Eine vollständige Abtrennung der Mikroorganismen ist durch einen Sedimentationsprozeß nicht möglich, so dass zum Teil gesundheitsschädliche Mikroorganismen mit dem Abwasser in die Umwelt gelangen können. Richtlinien der Europäischen Union zur Gewässerreinhaltung, die bereits weitgehend in nationales Recht umgewandelt wurden, sehen jedoch europaweit vor, dass ausschließlich biologisch geklärtes Abwasser, das im wesentlichen frei von Mikroorganismen ist, in die Umwelt abgelassen werden darf. Die Abtrennung der Mikroorganismen erfolgt in der Regel durch Feinfilter, die Mikroorganismen zuverlässig abtrennen.

In Deutschland sind vor allem in ländlichen Gebieten, insbesondere in Ostdeutschland, überwiegend aus technischen oder wirtschaftlichen Gründen, derzeit schätzungsweise 5,3 Millionen Menschen nicht an das kommunale Abwassernetz angeschlossen. Für die Betroffenen galt in Folge der genannten EG-Richtlinien, dass sie bis zum 31.12.2005 entweder durch Anschluss an das kommunale Netz oder durch den Betrieb einer Kleinkläranlage versorgt sein müssen. Diese Situation schaffte einen hohen Bedarf an dezentralen Abwasseraufbereitungsanlagen, der bis heute anhält.

Relativ weit verbreitet sind Kleinkläranlagen, die aus einem runden Betonbehälter bestehen, der wiederum in drei Kammern (Vorklärung / Belebungsbecken / Nachklärung) unterteilt ist. Die Vorklärung wird genutzt, um zunächst mechanisch oder über einfache Sedimentation Grobbestandteile aus dem Abwasser zu entfernen. Die abgetrennten Grobbestandteile müssen in regelmäßigen Zeitabständen abgepumpt werden. Das Belebungsbecken enthält Mikroorganismen, die die biologische Reinigung vornehmen, das Nachklärbecken dient zum Abtrennen der eingetragenen Mikroorganismen und deren Zurückführung in das Belebungsbecken und/oder in das Vorklärbecken. Ergänzt werden kann diese Ausrüstung beispielsweise durch einen Verdichter, der dem Belebungsbecken über einen Membranrohrbelüfter Sauerstoff zuführt sowie eine Tauchmotorpumpe zur Förderung des Überschußschlammes.

In einem Belebungsbecken bildet sich im Laufe der Zeit überschüssiger Klärschlamm, der regelmäßig abgesaugt werden muss. Alternativ sind auch sogenannte Schwebebettverfahren bekannt, bei denen die Menge an Überschußschlamm in der Regel drastisch reduziert ist. Im Gegensatz zu dem klassischen Belebungsbecken arbeitet man bei Schwebebettverfahren mit freischwimmenden Kunststoffkörpern, die das Belebungsbecken fast vollständig ausfüllen können. Mikroorganismen finden sich dabei sowohl auf den Kunststoffkörpern als auch freischwebend im Wasser.

In den letzten Jahren haben sich als Weiterentwicklung der bekannten Schwebebettverfahren verstärkt auch sogenannte WSB®-Verfahren (Wirbel-Schwebebett-Biofilmverfahren) etablieren können. Solche Verfahren sind beispielsweise in der DE 10127554 sowie in der DE 196 23 592 beschrieben. Auch bei diesen dienen Kunststoffkörper als Träger, auf denen sich die Mikroorganismen ansiedeln können. Die Mikroorganismen sind bei WSB®-Verfahren in der Regel allerdings fast vollständig auf dem Trägermaterial lokalisiert. Während bei Schwebebettverfahren ursprünglich ausschließlich anaerob (ohne Belüftung) gearbeitet wurde, werden bei WSB®-Verfahren durch den Eintrag von Luft die mit Mikroorganismen besiedelten Kunststoffträger optimal und gleichmäßig in der belebten Zone verteilt (bzw. "verwirbelt") und befinden sich in der Schwebe, wodurch es zu dem Namen Wirbel-Schwebe-Bett (WSB®) Verfahren kam. Auch bei stark schwankendem Zufluß, z.B. in der Urlaubszeit, bleibt das biologische System im Belebungsbecken immer intakt.

Auch bei einer Abwasseraufreinigung nach einem WSB®-Verfahren besteht jedoch das Problem, dass Mikroorganismen in die Umwelt herausgetragen werden, also keimhaltiges Abwasser in die belebte Bodenzone oder in einen Vorfluter eingeleitet wird.

Um zu vermeiden, dass schädliche Mikroorganismen in die belebte Bodenzone eingeleitet werden bzw. um zu ermöglichen, dass aufbereitetes Abwasser als Brauchwasser weiter Verwendung finden kann, muss das Abwasser daher zusätzlich filtriert werden.

So ist in der DE 19807890 eine Kläranlage beschrieben, deren Abwasser durch getauchte Mikrofiltrationsmembranen gefiltert wird, um es danach in einen Brauchwasserspeicher zu leiten und wieder zu verwerten. In der DE 20315451 wird eine Mikrofiltrationseinrichtung als Nachrüstsatz für eine Kleinkläranlage beschrieben, die nach dem Belebungsbecken, aber vor dem eigentlichen Ablauf der Kläranlage geschaltet ist.

In allen Fällen kommen dabei organische Filtermembrane zum Einsatz, die in Modulform angeordnet sind. Allerdings haben organische Filtermembranen den Nachteil, dass sie nur unzureichend regeneriert bzw. chemisch gereinigt werden können, so dass alle diese Membranen in der Regel in relativ kurzen Zeiträumen (< 1 Jahr) erneuert werden müssen. Zudem weisen organische Membranen nur eine eingeschränkte mechanische Stabilität auf, so dass sie bei höheren Flüssigkeitsdrücken leicht beschädigt werden können. Besonders gravierend gestaltet sich die Verwendung von organischen Membranen beim den bereits erwähnten Schwebebettverfahren, insbesondere beim WSB®-Verfahren, da bei diesen durch die Kunststoffträgerteilchen, die im Belebungsbecken frei beweglich sind, mechanische Defekte an der organischen Membran verursacht werden können, durch die die wenig stabilen organischen Filtermembranen innerhalb von kurzer Zeit zerstören werden können.

Die Verwendung von Filtermembranen ist zudem mit dem grundsätzlichen Problem verknüpft, dass sich während der Filtration an der Außenfläche der Membran eine Deckschicht abscheidet (das sogenannte Fouling), die dem zu filtrierenden Gut einen Widerstand entgegenstellt. Dies führt zu einer drastischen Reduzierung der Filterleistung bis hin zur totalen Verstopfung und somit zu einem Totalausfall der Filtermembran.

Zum Ablösen dieser Deckschicht auf der Membran bedarf es einer regelmäßigen Reinigung. Dabei wird der Permeatstrom umgekehrt, so dass das vorher gefilterte Wasser nun entgegengesetzt wieder durch die Filtermembran gedrückt wird (Rückspülung). Dadurch wird die Deckschicht zumindest teilweise abgelöst, wodurch die Effizienz der Filterleistung für eine gewisse Zeit wieder erhöht ist. Allerdings erfordert dieses Vorgehen in der Regel ein separates Equipment. Zudem wird die Reinigung mit einem Verlust an bereits gefiltertem Wasser erkauft, was die Effizienz des Gesamtsystems stark herabsetzt.

Verfahren, bei denen im Wasser schwebende Formkörper und/oder Feststoffe zur Reinigung von Membranoberflächen verwendet werden, sind in der EP 1 034 835 A1, in der DE 19953459 A1, in der JP 63214177 und in der WO 91/11396 beschrieben. Die ersten beiden Druckschriften offenbaren in diesem Zusammenhang auch die Verwendung keramischer Membranen.

Keramische Filtermembranen, die sich zur Wasserfiltration eignen, sind sind von F. Koppe et al.: "Vorteilspackung - Flachmembranen aus technischer Keramik für die Querstromfiltration", Chemie Technik, 26. Jahrgang (1997), Nr. 9, Huthig, Heidelberg, DE (ISSN: 0340-9961), in der US 2003/0132174 A1, in der JP 2001-233681, in der DE 20 2004 010 485 U1 sowie auch in der WO 2004/071620 der Anmelderin beschrieben.

Die Herstellung keramischer Filtermembranen mit mehrschichtigem Aufbau, die eine Trennschicht aus nanoskaligen Partikeln aufweisen, ist in der EP 0 426 546 A2 beschrieben. Auch die EP 0 850 680 A1 betrifft keramische Filtermembranen mit mehrschichtigem Aufbau.

Der vorliegenden Erfindung liegt die Aufgabe zugrunde, eine einfache und kostengünstige Lösung zur Reinigung von Abwässern bereitzustellen. Der Fokus soll dabei insbesondere auf der Abtrennung von in Abwässern enthaltenen Mikroorganismen liegen. Aus dem Stand der Technik bekannte Probleme wie die genannte Zerstörung von Filtermembranen durch biologische oder mechanische Einwirkung oder die Verstopfung von Membranen und damit verbundene aufwendige Reinigungsschritte sollen dabei weitestgehend vermieden werden. Die Lösung soll kompakt und mechanisch robust sein.

Diese Aufgabe wird gelöst durch die Kläranlage mit den Merkmalen des Anspruchs 1 und das Verfahren mit den Merkmalen des Anspruchs 11. Bevorzugte Ausführungsformen der erfindungsgemäßen Kläranlage sind in den abhängigen Ansprüchen 2 bis 10 dargestellt..

Bei der erfindungsgemäßen Kläranlage handelt es sich vorzugsweise um eine Kleinkläranlage, insbesondere mit einer Reinigungsleistung für 1 bis 5000 Personen (bis zu einem Einwohnerwert von 5000).

Nach der vorliegenden Erfindung weist eine Kläranlage mindestens ein Belebungsbecken für Abwasser auf. In diesem findet eine biologische Reinigung des Abwassers durch Mikroorganismen statt. Alternativ oder zusätzlich ist mindestens ein Nachklärbecken für Abwasser vorgesehen.

Bei der erfindungsgemäßen Kläranlage ist entweder das Belebungsbecken oder das Nachklärbecken mit im Abwasser frei schwebenden Formkörpern befüllt. In einer alternativen Ausführungsform sind sowohl das Belebungsbecken als auch das Nachklärbecken mit im Abwasser frei schwebenden Formkörpern befüllt.

Schließlich weist die erfindungsgemäße Kläranlage mindestens eine Filtrationsvorrichtung zur Abwasserreinigung auf, die mindestens zwei keramikbasierte Membranplatten zur Abtrennung von Mikroorganismen umfasst.

Eine Filtrationseinrichtung kann sowohl direkt an ein Belebungsbecken angeschlossen sein als auch an ein Nachklärbecken.

Bei den Formkörpern handelt es sich um Formkörper auf Basis von Kunststoff, insbesondere auf Basis von Polyethylen.

Für das Belebungsbecken sind Formkörper besonders bevorzugt, die sich als Träger für Mikroorganismen eignen (geeignete Formkörper sind beispielsweise in der EP 685432 beschrieben). In einer solchen bevorzugten Ausgestaltung arbeitet die erfindungsgemäße Kläranlage insbesondere nach dem bereits erwähnten WSB®-Verfahren.

In weiteren Ausgestaltungen der erfindungsgemäßen Kläranlage kann es auch bevorzugt sein, im Belebungsbecken Formkörper einzusetzen, die sich nicht als Träger für Mikroorganismen eignen.

Nicht als Träger für Mikroorganismen taugliche Formkörper sind insbesondere für das Nachklärbecken bevorzugt. In besonders bevorzugten Ausführungsformen können Formkörper im Nachklärbecken sogar biozide Eigenschaften aufweisen. Dies hat den Vorteil, dass es Mikroorganismen erschwert wird, sich im Nachklärbecken anzusiedeln.

Eine an ein Belebungsbecken angeschlossene Filtrationsvorrichtung ist in einer erfindungsgemäßen Kläranlage derart angeordnet, dass die Oberfläche der mindestens einen Membran der Filtrationsvorrichtung in unmittelbaren Kontakt mit den in dem Belebungsbecken schwebenden Formkörpern treten kann. Dazu ist die mindestens eine Membran der mindestens einen Filtrationsvorrichtung mindestens teilweise, vorzugsweise vollständig, in das Belebungsbecken eingetaucht.

Im Betrieb können in dieser Anordnung die sich im Belebungsbecken befindenden Formkörper kontinuierlich an die Oberfläche der mindestens einen Membran stoßen. Dies hat zur Folge, dass eine sich auf der Membranoberfläche bildende Deckschicht aus Mikroorganismen durch die Stöße mechanisch abgelöst wird bzw. dass deren Bildung stark verzögert wird. Eine häufige Reinigung der Membran durch die eingangs erwähnte Rückspülung wird dadurch mit besonderem Vorteil erfolgreich vermieden. Die Effizienz einer erfindungsgemäßen Kläranlage ist entsprechend drastisch erhöht.

Eine derartige Anordnung ist auch für eine an ein Nachklärbecken angeschlossene Filtrationsvorrichtung vorgesehen. Die mindestens eine Membran der mindestens einen Filtrationsvorrichtung ist auch in diesem Fall bevorzugt mindestens teilweise, vorzugsweise vollständig, in das Nachklärbecken eingetaucht, so dass die sich im Nachklärbecken befindenden Formkörper im Betrieb an die Oberfläche der mindestens einen Membran stoßen können und diese dadurch reinigen bzw. deren Verschmutzung vermeiden oder zumindest stark verzögern.

In einer erfindungsgemäßen Kläranlage werden Formkörper eingesetzt, die eine maximale Raumdiagonale zwischen 0,1 cm und 10 cm, vorzugsweise zwischen 0,5 cm und 5 cm, insbesondere zwischen 0,5 cm und 2 cm, aufweisen.

Bei einer erfindungsgemäßen Kläranlage sind die Membranplatten parallel zueinander angeordnet. Der Abstand zwischen 2 benachbarten Membranplatten entspricht dabei mindestens der maximalen Raumdiagonale der Formkörper. Vorzugsweise überschreitet der Abstand die maximale Raumdiagonale der Formkörper um mindestens 5 %, vorzugsweise um mindestens 25 %, insbesondere um mindestens 100 %.

Durch diese Maßnahme wird es ermöglicht, dass die Formkörper im Belebungsbecken und/oder im Nachklärbecken zwischen benachbarte Membranplatten gleiten können und so mit den sich gegenüberliegenden Oberflächen der benachbarten Membranplatten unmittelbar in Kontakt treten können. Damit wird auch auf diesen Oberflächen die Bildung einer Deckschicht zumindest stark verzögert, was sich gleichermaßen positiv auf die Effizienz der Kläranlage und die Häufigkeit notwendiger Reinigungen auswirkt.

Bei der Einstellung des Abstands zwischen den benachbarten Membranplatten spielen insbesondere 2 Faktoren eine Rolle. Zum einen versucht man, den Abstand der Membranplatten möglichst gering einzustellen, um die Filtrationsvorrichtung möglichst kompakt zu halten. Zum anderen sollten sich die Formkörper zwischen den Membranplatten auf keinen Fall verklemmen, da es ansonsten zur lokalen Ausbildung einer Deckschicht aus Mikroorganismen kommen könnte. Der optimale Abstand hängt dabei insbesondere von der Form und der Größe der Formkörper ab. So wurde für Formkörper "K1 Biofilm Carrier Elements" (Firma Kaldness, 3103 Tønsberg, Norwegen), für die eine maximale Raumdiagonale von 13,5 mm bestimmt wurde, ein optimaler Abstand der Membranplatten von 30 mm ± 0,5 mm ermittelt. Der Abstand überschreitet in diesem Fall die maximale Raumdiagonale der Formkörper um mehr als 100 %.

Bevorzugt handelt es sich bei einer Membran der Filtrationsvorrichtung um eine Membranplatte aus einer porösen Keramik. In der Wahl der Form der Membranplatte ist man grundsätzlich frei. So können etwa runde oder rechteckige Membranplatten, abgestimmt auf den jeweiligen Einzelfall, bevorzugt sein.

Eine keramikbasierte Membran zeichnet sich durch Resistenz gegenüber biologischer oder chemischer Einwirkung sowie durch hohe mechanische Stabilität aus. Im Gegensatz zu den aus dem Stand der Technik bekannten organischen Filtermembranen, die bislang Anwendung in Kleinkläranlagen fanden, lässt sich eine Filtrationsvorrichtung mit keramikbasierter Membran daher problemlos auch in Schwebebettverfahren, insbesondere auch in nach dem WSB®-Verfahren betriebenen Kleinkläranlagen einsetzen. Sie widersteht problemlos der durch die Mikroorganismen verursachten biologischen Einwirkung und trennt diese zugleich zuverlässig ab. Auch feine Fest- und Schwebstoffe können gegebenenfalls zuverlässig abgetrennt werden. Zugleich ist sie auch resistenter gegenüber mechanischer Einwirkung, beispielsweise durch im Belebungsbecken schwimmenden Kunststoffträgerteilchen. Dies macht sich im Hinblick auf Wartungsintervalle und Lebensdauer der Membran besonders positiv bemerkbar.

Die Membranplatten weisen stets eine Beschichtung auf. Diese umfasst eine Trennschicht, die mindestens teilweise, in einigen bevorzugten Ausführungsformen im wesentlichen vollständig, aus nanoskaligen Partikeln besteht. Vorzugsweise weist die Trennschicht einen Anteil an nanoskaligen Partikeln von mindestens 5 Gew.-% auf, besonders bevorzugt von mindestens 25 Gew.-%, insbesondere von mindestens 40 Gew.-%.

Unter nanoskaligen Partikeln sollen im Rahmen dieser Anmeldung Partikel mit einer mittleren Partikelgröße von unter 100 nm, besonders bevorzugt unter 50 nm, verstanden werden. Diese Größenangaben beziehen sich auf Werte, die mittels Lichtstreungsexperimenten gewonnen wurden.

Erfindungsgemäß kann die erwähnte Beschichtung auf der Membranplatte ausschließlich aus der Trennschicht bestehen. In einer besonders bevorzugten Ausführungsform umfasst die Beschichtung aber noch mindestens eine weitere poröse Schicht, die zwischen der Membranplatte und der Trennschicht angeordnet ist. Bei der Trennschicht handelt es sich dabei bevorzugt um die außenliegende Schicht, an der im wesentlichen die Abtrennung der Mikroorganismen erfolgt.

Die auf der Membranplatte befindliche Beschichtung weist vorzugsweise eine Dicke zwischen 100 nm und 150 µm, vorzugsweise zwischen 500 nm und 100 µm, insbesondere von ca. 25 µm bis 60 µm, auf. Diese Werte gelten vorzugsweise auch für die Fälle, bei denen die Beschichtung aus der mindestens einen weiteren porösen Schicht und der Trennschicht besteht.

Die Dicke der Trennschicht liegt vorzugsweise im Bereich zwischen 100 nm und 75 µm, insbesondere im Bereich zwischen 5 µm und 50 µm, insbesondere bei ca. 25 µm.

Die Dicke der mindestens einen weiteren porösen Schicht liegt vorzugsweise im Bereich zwischen 100 nm und 75 µm, insbesondere im Bereich zwischen 5 µm und 50 µm, insbesondere bei ca. 25 µm.

Die poröse Keramik der Membranplatte (Substrat) weist Poren mit einem Durchmesser zwischen 100 nm und 10 µm, besonders bevorzugt zwischen 500 nm und 6 µm, insbesondere zwischen 500 nm und 3 µm, auf.

Die mindestens eine weitere poröse Schicht weist vorzugsweise Poren mit einem Durchmesser zwischen 500 nm und 2 µm, besonders bevorzugt zwischen 500 nm und 1 µm, insbesondere zwischen 600 nm und 900 nm, auf.

Im Falle einer mit einer Trennschicht versehenen Membranplatte ist insbesondere die Porengröße der mindestens einen Trennschicht für die Abtrennung der Mikroorganismen sehr wichtig. Die Trennschicht weist Poren mit einem Durchmesser zwischen 1 nm und 1400 nm, vorzugsweise zwischen 50 nm und 500 nm, insbesondere zwischen 50 nm und 300 nm, besonders bevorzugt zwischen 200 nm und 300 nm, auf.

Die Porengröße ggf. darunterliegender Schichten beeinflusst die Abtrennung der Mikroorganismen in der Regel nicht unmittelbar. Allerdings ist es bevorzugt, dass darunterliegende Schichten im Verhältnis zur Trennschicht größere Poren aufweisen. Besonders bevorzugt besteht die Porengröße betreffend ein Gefälle zur außenliegenden Trennschicht hin. So ist es bevorzugt, dass nach außen hin die Porengrößen sinken.

In bevorzugten Ausführungsformen mit mindestens einer weiteren porösen Schicht zwischen der mindestens einen Trennschicht und der Membranplatte liegt die Größe der Poren der mindestens einen weiteren porösen Schicht zwischen der Größe der Poren der Trennschicht (geringste Porengrößen) und der Größe der Poren der Membranplatte (hat die größten Poren). Dies gilt insbesondere für die Mittelwerte der Porengrößen innerhalb der Schichten (da die Porengröße innerhalb einer Schicht oft nicht einheitlich ist, kann es gegebenenfalls zu Überlappungen im Hinblick auf die absoluten Porengrößen kommen, so dass beispielweise die Größe der größten Poren der mindestens einen Trennschicht die Größe der kleinsten Poren der mindestens einen weiteren porösen Schicht überschreiten kann).

Bei der porösen Keramik der Membranplatte handelt es sich meist um eine Keramik auf Basis eines Metalloxids, insbesondere auf Basis von Aluminiumoxid. Neben oxidischen Keramiken wie Aluminiumoxidkeramiken können in weiteren bevorzugten Ausführungsformen auch nichtoxidische Keramiken zum Einsatz kommen.

Bei den Nanopartikeln der Trennschicht handelt es sich um um Aluminiumoxid-Partikel, Nanopartikel aus Zirkoniumdioxid oder Titandioxid oder auch Mischungen aus den genannten oxidischen Nanopartikeln.

In einer besonders bevorzugten Ausführungsform der Filtrationsvorrichtung weist die Membranplatte innenliegend mindestens einen Kanal zur Ableitung von gereinigtem Abwasser auf. Bevorzugt sind mehrere, vorzugsweise parallel zueinander angeordnete Kanäle, die sich gleichmäßig über den Innenraum der Membranplatte erstrecken.

Eine Filtrationsvorrichtung weist mindestens 2 Membranplatten auf. Abhängig vom Einzelfall kann die Anzahl der Membranplatten sehr stark variieren. So können zur Reinigung relativ geringer Mengen an Abwasser Filtrationsvorrichtungen mit 3 bis 15, insbesondere 3 - 10 Membranplatten bevorzugt sein. Fallen größere Mengen an Abwasser an, so sind jedoch auch Filtrationsvorrichtungen mit mehreren hundert Membranplatten denkbar.

Eine Filtrationsvorrichtung weist vorzugsweise einen modularen Aufbau auf, der es erlaubt, die Anzahl der Membranplatten entsprechend den jeweiligen Anforderungen zu variieren.

Wie bereits angesprochen wurde, kann die Form einer Membranplatte in einer Filtrationsvorrichtung grundsätzlich, abhängig vom Einzelfall, frei gewählt werden. Gleiches gilt grundsätzlich auch für die Dimensionen einer Membranplatte, wobei die Länge bzw. Breite eine Membranplatte in der Regel 150 cm nicht übersteigt. So weist in einer bevorzugten Ausführungsform eine rechteckige Membranplatte eine Länge von ca. 50 cm und eine Breite von ca. 11 cm auf.

Die Dicke einer Membranplatte in einer erfindungsgemäßen Filtrationsvorrichtung liegt im Bereich zwischen 0,15 mm und 20 mm, insbesondere zwischen 0,5 mm und 10 mm. In einer besonders bevorzugten Ausführungsform weist eine Membranplatte eine Dicke von ca. 6 mm auf.

Wie schon erwähnt wurde, umfasst die vorliegende Erfindung auch ein Verfahren zur Reinigung von Abwasser. Dieses zeichnet sich dadurch aus, dass sich im Abwasser befindende Mikroorganismen mittels der beschriebenen Kläranlage abgetrennt werden.

Das erfindungsgemäße Verfahren umfasst eine biologische Reinigung des Abwassers durch Mikroorganismen in mindestens einem Belebungsbecken.

Weiter umfasst ein Verfahren nach der vorliegenden Erfindung eine Nachklärung des Abwassers in mindestens einem Nachklärbecken.

Die genannten und weitere Vorteile der Erfindung ergeben sich aus der Beschreibung der nun folgenden Beispiele und Abbildungen in Verbindung mit den Unteransprüchen. Dabei können die einzelnen Merkmale der Erfindung für sich allein oder in Kombination miteinander verwirklicht sein. Die Beispiele und Abbildungen dienen lediglich zur Erläuterung und zum besseren Verständnis der Erfindung und sind in keiner Weise einschränkend zu verstehen.

In den Abbildungen zeigen:
- Fig. 1:: Bevorzugt verwendeter Formkörper "K1 Biofilm Carrier Elements" der Firma Kaldness, 3103 Tønsberg, Norwegen
- Fig. 2:: Zwischen Membranplatten verklemmte Formkörper
- Fig. 3:: Links: Membranplatten mit Kanälen zur Abführung von gereinigtem Wasser; Rechts: Mikroskopischer Ausschnitt eines Querschnitts durch eine der Membranplatten
- Fig. 4:: Membranen aus dem konventionellen Filtrationsbetrieb (ohne Formkörper, nur mit Belüftung gereinigt)
- Fig. 5:: Diagramm zur Veranschaulichung des abrasiven Effektes, der durch an eine Membran aus dem konventionellen Filtrationsbetrieb (gemäß Fig. 4) stoßende Formkörper verursacht wird.

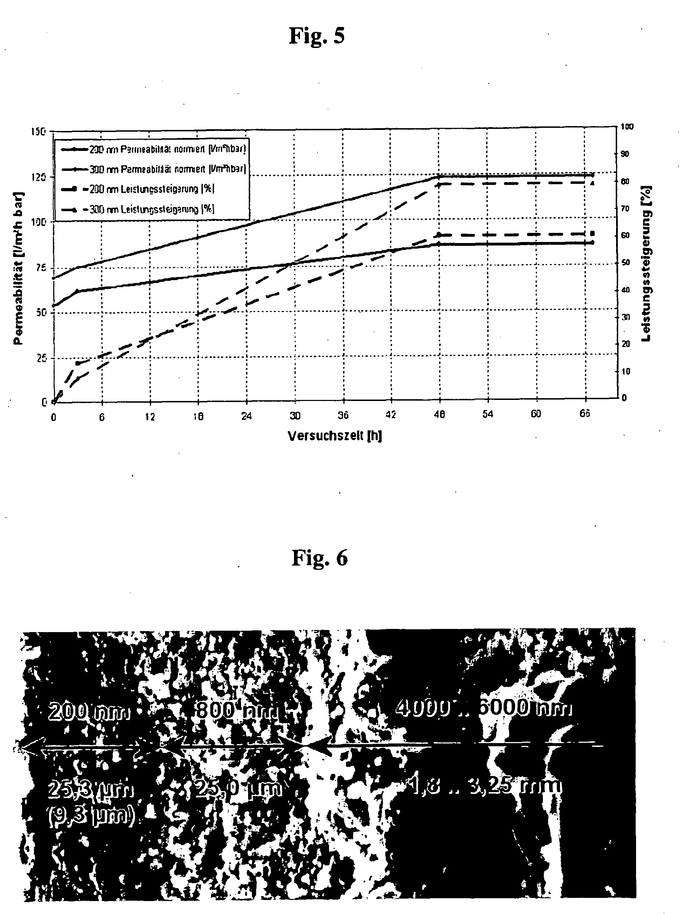

- Fig. 6:: REM-Aufnahme eines Schnittes durch eine erfindungsgemäß geeignete Membranplatte. Zu erkennen sind drei Schichten, nämlich links die Trennschicht, mittig eine weitere poröse Schicht und rechts eine Membranplatte aus einer porösen Keramik. Die Schichten und die Membranplatte selbst bestehen jeweils aus Aluminiumoxid. Die Trennschicht und die weitere poröse Schicht weisen jeweils eine Dicke von ca. 25 µm auf. Die Dicke der Membranplatte beträgt dagegen 1,8 mm bis 3,25 mm. Die Porengröße sinkt zur Trennschicht hin von 4000 bis 6000 nm (Membranplatte) über ca. 800 nm (mittige weitere poröse Schicht) auf ca. 200 nm (Trennschicht).

### Beispiel 1

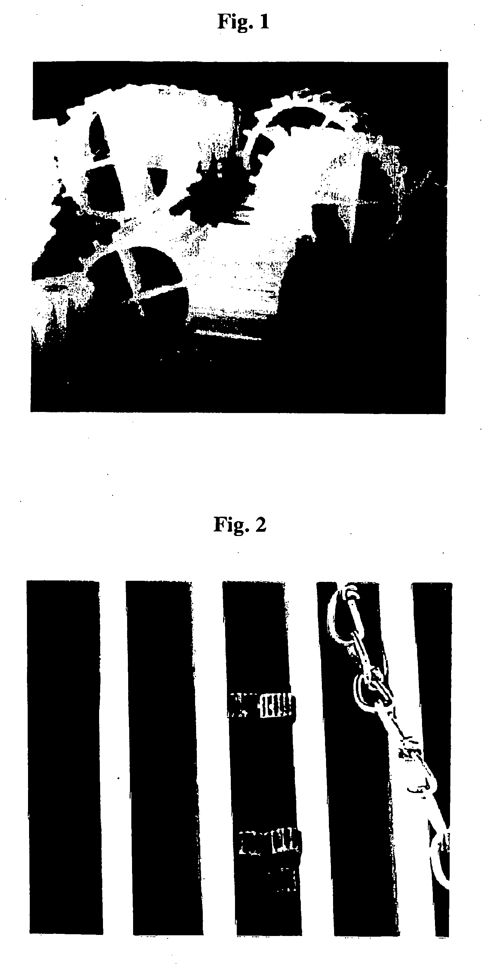

Es wurde untersucht, wie der Abstand zwischen benachbarten Membranplatten einer Filtrationsvorrichtung für geeignete Formkörper (K1 Biofilm Carrier Elements der Firma Kaldness, 3103 Tønsberg, Norwegen; siehe Fig. 1) optimal einzustellen ist. Wie bereits erwähnt wurde, spielen dabei insbesondere 2 Faktoren eine Rolle: Grundsätzlich versucht man, den Abstand zwischen den Membranplatten möglichst gering einzustellen, um die Filtrationsvorrichtung möglichst kompakt zu halten. Dabei dürfen sich die Formkörper zwischen den Membranplatten jedoch auf keinen Fall verklemmen, da ansonsten die Bewegung der Formkörper an der Membranoberfläche und damit die mechanische Deckschichtabrasion gehemmt wird.

Bei zu geringem Abstand führte die Bewegung der Formkörper zwischen zwei Membranplatten infolge ihrer Größe und Form (die maximale Raumdiagonale der K1-Formkörper liegt zwischen 7,0 mm und 13,5 mm) dazu, dass die Formkörper zwischen den Plattenwänden sowie auch untereinander verkanteten, was in Fig. 2 gut zu erkennen ist.

Erst bei einem Abstand von 30 mm ± 0,5 mm wurden auch nach wochenlangem Betrieb keine Verkantungen mehr festgestellt. Bei diesem Abstand wurden zudem optimale Werte für den Fluß bzw. die Filtrationsleistung der Membranpfatten gemessen.

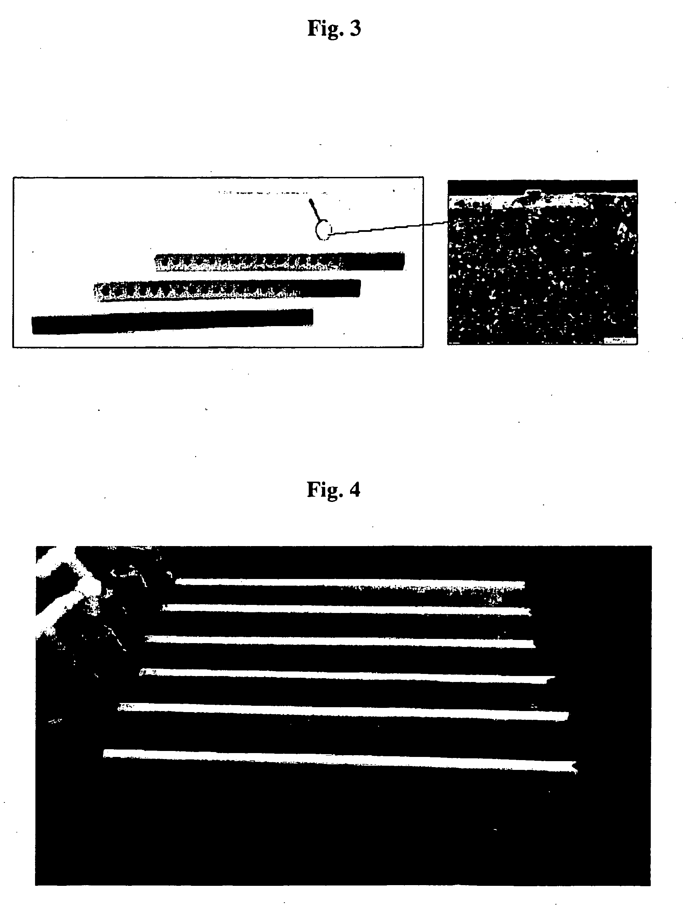

Die verwendeten Membranplatten aus Aluminiumoxid sind in Fig. 3 abgebildet. Im linken Bild sind jeweils die Ausgänge mehrerer Kanäle in den Membranen zu erkennen. Die Kanäle dienen der Abführung des gereinigten Abwassers. Im rechten Bild ist ein mikroskopischer Ausschnitt eines Querschnitts durch eine der Membranplatten abgebildet. Im unteren Bereich (dunkel) erkennt man die relativ grobkörnige Struktur der porösen Keramik der Membranplatte. Oben (hell) erkennt man die wesentlich feinere Struktur einer dünnen Beschichtung auf der porösen Keramik.

### Beispiel 2

Auf einer Membranplatte wurde durch Auftrag eines dünnen Eisenhydroxi-Filmes eine Deckschicht aus Mikroorganismen simuliert. Die Membranplatte wurde anschließend über einen Zeitraum von 62 Stunden in einem mit Formkörpern (K1 Biofilm Carrier Elements der Firma Kaldness, 3103 Tønsberg, Norwegen; siehe Fig. 1) befüllten Belebungsbecken einer Testanlage eingesetzt. Nach diesem Zeitraum war die Eisenhydroxidschicht durch Abrasion im wesentlichen vollständig von der Membranplatte abgelöst. Ein Vergleichsversuch ohne Formkörper ergab hingegen keine Ablösung der simulierten Deckschicht.

### Beispiel 3

Membranen aus dem konventionellen Filtrationsbetrieb (ohne Formkörper, nur mit Belüftung gereinigt, siehe Fig. 4) wurden nach vier Monaten Filtration in Belebtschlamm für Tests zur Deckschichtablösung genutzt. Die Tests wurden jeweils mehrfach mit Membranen mit unterschiedlichen Porengrößen (200 nm und 300 nm) durchgeführt.

Dazu wurden die mit einer dünnen, sich schleimig anfühlenden Deckschicht aus Mikroorganismen beschichteten Membranen in eine nach dem WSB®-Verfahren betriebene Testanlage eingebracht, die mit Formkörpern (K1 Biofilm Carrier Elements der Firma Kaldness, 3103 Tønsberg, Norwegen; siehe Fig. 1) befüllt war. Im Betrieb waren die Oberflächen der Membranen kontinuierlich Stößen durch die Formkörper ausgesetzt. Nach 66 Stunden wurden die Membranen wieder entnommen und untersucht. Die sich schleimig anfühlende Deckschicht war vollständig verschwunden.

Während des Betriebes in der Testanlage wurde kontinuierlich die Permeabilität der Membranen gemessen. Sowohl für Membranen mit 200 nm Porengröße als auch für die mit 300 nm Porengröße wurde ausgehend von einem Anfangswert eine kontinuierliche Zunahme der Permeabilität gemessen. Nach ca. 48 Stunden erreichte die Permeabilität in beiden Fällen einen Maximalwert und blieb in der Folge konstant. Für die Membranen mit 200 nm Porengröße ergab sich aus der Zunahme der Permeabilität eine Leistungssteigerung von ca. 61 %, für Membranen mit 200 nm Porengröße wurde sogar eine Leistungssteigerung von knapp 80 % festgestellt.

Die Ergebnisse der Messungen sind in Abb. 5 dargestellt. In dem Diagramm sind die Permeabilität [l/m²*h*bar] und die Leistungssteigerung [%] gegen die Versuchszeit [h] aufgetragen. Die obere durchgezogene Linie (hell) beschreibt die Permeabilitätsänderung der Membran mit 300 nm Porengröße. Die untere durchgezogene Linie (dunkel) gibt analog die Permeabilitätsänderung der Membran mit 200 nm Porengröße an. Die gestrichelten Linien geben jeweils den Verlauf der Leistungssteigerung für die unterschiedlichen Membranen an.

## Patentansprüche

1. Kläranlage, insbesondere Kleinkläranlage, mit mindestens einem Belebungsbecken für Abwasser und/oder mit mindestens einem Nachklärbecken für Abwasser, wobei das Belebungsbecken und/ oder das Nachklärbecken mit im Abwasser frei schwebenden Formkörpern auf Basis von Kunststoff mit einer maximalen Raumdiagonale zwischen 0,1 cm und 10 cm befüllt sind, **dadurch gekennzeichnet, daß** die Kläranlage mindestens eine Filtrationsvorrichtung zur Abwasserreinigung aufweist, die mindestens zwei im wesentlichen parallel zueinander angeordnete Membranplatten aus einer porösen Keramik mit einer Dicke zwischen 0,15 mm und 20 mm und Poren mit einem Durchmesser zwischen 100 nm und 10 µm umfasst, die mindestens teilweise in das mindestens eine Belebungsbecken und/oder in das mindestens eine Nachklärbecken eingetaucht sind, so dass die Oberfläche der Membranen in unmittelbaren Kontakt mit den frei schwebenden Formkörpern treten kann, wobei die Membranplatten eine Beschichtung aufweisen, die eine Trennschicht mit Poren mit einem Durchmesser zwischen 1 nm und 1400 nm umfasst und die mindestens teilweise aus nanoskaligen Partikeln aus der Gruppe mit Aluminiumoxid-, Zirkoniumoxid und Titandioxid-Partikeln mit einer mittleren Partikelgröße < 100 nm besteht.

2. Kläranlage nach Anspruch 1, **dadurch gekennzeichnet, dass** es sich bei den Formkörpern um Formkörper auf Basis von Polyethylen handelt.

3. Kläranlage nach einem der vorhergehenden Ansprüche, **dadurch gekennzeichnet, dass** die Formkörper im Nachklärbecken als Träger für Mikroorganismen ungeeignet sind, insbesondere biozide Eigenschaften aufweisen.

4. Kläranlage nach einem der vorhergehenden Ansprüche, **dadurch gekennzeichnet, dass** die maximale Raumdiagonale der Formkörper zwischen 0,5 cm und 5 cm, insbesondere zwischen 0,5 cm und 2 cm, beträgt.

5. Kläranlage nach einem der vorhergehenden Ansprüche, **dadurch gekennzeichnet, dass** der Abstand zwischen benachbarten Membranplatten vorzugsweise mindestens der maximalen Raumdiagonale der Formkörper entspricht, vorzugsweise diese um mindestens 5 %, besonders bevorzugt um mindestens 25 %, insbesondere um mehr als 100 %, überschreitet, so dass die Formkörper zwischen benachbarte Membranplatten gleiten können und mit den sich gegenüberliegenden Oberflächen der benachbarten Membranplatten unmittelbar in Kontakt treten können.

6. Kläranlage nach einem der vorhergehenden Ansprüche, **dadurch gekennzeichnet, dass** die Beschichtung mindestens eine weitere poröse Schicht umfasst, die zwischen der Membranplatte und der Trennschicht angeordnet ist.

7. Kläranlage nach einem der vorhergehenden Ansprüche, **dadurch gekennzeichnet, dass** die poröse Keramik der Membranplatte Poren mit einem Durchmesser zwischen 500 nm und 3 µm, aufweist.

8. Kläranlage nach einem der vorhergehenden Ansprüche, **dadurch gekennzeichnet, dass** die Trennschicht Poren mit einem Durchmesser zwischen 50 nm und 300 nm, besonders bevorzugt zwischen 200 nm und 300 nm, aufweist.

9. Kläranlage nach einem der vorhergehenden Ansprüche, **dadurch gekennzeichnet, dass** der Abstand zwischen den mindestens zwei im wesentlichen parallel zueinander angeordneten Membranplatten im wesentlichen immer der gleiche ist.

10. Kläranlage nach einem der vorhergehenden Ansprüche, **dadurch gekennzeichnet, dass** die Membranplatten einen Dicke zwischen 0,5 mm und 10 mm, insbesondere von ca. 6 mm, aufweisen.

11. Verfahren zur Reinigung von Abwasser in einer Kläranlage, umfassend eine biologische Reinigung des Abwassers durch Mikroorganismen in mindestens einem Belebungsbecken und eine Nachklärung des Abwassers in mindestens einem Klärbecken, wobei die Mikroorganismen mit einer Kläranlage nach einem der vorhergehenden Ansprüche abgetrennt werden.

## Claims

1. A sewage treatment plant, in particular a small sewage treatment plant, comprising at least one activation tank for wastewater and/or at least one secondary clarification tank for wastewater, the activation tank and/or the secondary clarification tank being charged with shaped bodies based on synthetic material having a maximum space diagonal of between 0.1 cm and 10 cm and being freely suspended in the wastewater, **characterized in that** the sewage treatment plant has at least one filtration appliance for wastewater purification comprising at least two membrane plates arranged essentially in parallel to one another made of a porous ceramic and having a thickness between 0.15 mm and 20 mm and pores having a diameter between 100 nm and 10 µm, the membrane plates are at least in part submerged in the at least one activation tank and/or in the at least one secondary clarification tank such that the surface of the membranes can immediately contact the freely suspended shaped bodies, wherein the membrane plates have a coating comprising a separation layer with pores having a diameter between 1 nm and 1400 nm and which at least in part is composed of nanoscale particles from the group consisting of aluminum oxide, zirconium oxide and titanium dioxide particles having an average particle size of less than 100 nm.

2. The sewage treatment plant according to claim 1, **characterized in that** the shaped bodies are shaped bodies based on polyethylene.

3. The sewage treatment plant according to any one of the preceding claims, **characterized in that** the shaped bodies in the secondary clarification tank are not applicable as carriers for microorganisms, in particular have biocidal properties.

4. The sewage treatment plant according to any one of the preceding claims, **characterized in that** the maximum space diagonal of the shaped bodies is between 0.5 cm and 5 cm, in particular between 0.5 cm and 2 cm.

5. The sewage treatment plant according to any one of the preceding claims, **characterized in that** the distance between adjacent membrane plates preferably corresponds to at least the maximum space diagonal of the shaped bodies, preferably exceeds said maximum space diagonal by at least 5 %, particularly preferred by at least 25 %, in particular by more than 100 %, so that the shaped bodies can slide between adjacent membrane plates and can immediately contact the opposite surfaces of the adjacent membrane plates.

6. The sewage treatment plant according to any one of the preceding claims, **characterized in that** the coating comprises at least one further porous layer arranged between the membrane plate and the separation layer.

7. The sewage treatment plant according to any one of the preceding claims, **characterized in that** the porous ceramic of the membrane plate has pores having a diameter between 500 nm and 3 µm.

8. The sewage treatment plant according to any one of the preceding claims, **characterized in that** the separation layer has pores having a diameter between 50 nm and 300 nm, particularly preferred between 200 nm and 300 nm.

9. The sewage treatment plant according to any one of the preceding claims, **characterized in that** the distance between the at least two membrane plates, which are arranged essentially parallel to one another, is essentially always the same.

10. The sewage treatment plant according to any one of the preceding claims, **characterized in that** the membrane plates have a thickness between 0.5 mm and 10 mm, in particular of ca. 6 mm.

11. A method of purifying wastewater in a sewage treatment plant, comprising biologically purifying the wastewater with microorganisms in at least one activation tank and secondarily clarifying the wastewater in at least one clarification tank, wherein the microorganisms are separated using a sewage treatment plant according to any one of the preceding claims.

## Revendications

1. Station d'épuration d'eau, en particulier petite station d'épuration d'eau, présentant au moins un bassin à boues activées pour l'eau usée et/ou au moins un bassin de décantation secondaire pour l'eau usée,
le bassin à boues activées et/ou le bassin de décantation secondaire étant remplis de corps moulés flottant librement dans l'eau usée, à base de matière synthétique et dont la diagonale maximale est comprise entre 0,1 cm et 10 cm,
**caractérisée en ce que**
la station d'épuration présente au moins un dispositif de filtration qui épure l'eau usée, qui comporte au moins deux plaques à membrane disposées essentiellement en parallèle l'une à l'autre, en céramique poreuse, d'une épaisseur comprise entre 0,15 mm et 20 mm et dont les pores ont un diamètre compris entre 100 nm et 10 µm, qui sont plongées au moins en partie dans le ou les bassins à boues activées et/ou dans le ou les bassins de décantation secondaire de telle sorte que la surface des membranes puisse entrer en contact direct avec les corps moulés flottant librement,
**en ce que** les plaques à membrane présentent un revêtement qui comporte une couche de séparation dont les pores ont un diamètre compris entre 1 nm et 1 400 nm et qui est constituée au moins en partie de nanoparticules sélectionnées dans l'ensemble constitué des particules d'oxyde d'aluminium, d'oxyde de zirconium et de dioxyde de titane, la taille moyenne des particules étant < 100 nm.

2. Station d'épuration selon la revendication 1, **caractérisée en ce que** les corps moulés sont des corps moulés à base de polyéthylène.

3. Station d'épuration selon l'une des revendications précédentes, **caractérisée en ce que** les corps moulés prévus dans le bassin de décantation secondaire ne conviennent pas comme supports pour microorganismes et en particulier présentent des propriétés biocides.

4. Station d'épuration selon l'une des revendications précédentes, **caractérisée en ce que** la diagonale maximale des corps moulés est comprise entre 0,5 cm et 5 cm et en particulier entre 0,5 cm et 2 cm.

5. Station d'épuration selon l'une des revendications précédentes, **caractérisée en ce que** la distance entre deux plaques à membrane voisines correspond de préférence au moins à la diagonale maximale des corps moulés et dépasse cette dernière de préférence d'au moins 5 %, de façon particulièrement préférable d'au moins 25 % et en particulier de plus de 100 %, de telle sorte que les corps moulés puissent glisser entre des plaques à membrane voisines et entrer en contact direct avec les surfaces opposées des plaques à membrane voisines.

6. Station d'épuration selon l'une des revendications précédentes, **caractérisée en ce que** le revêtement comporte au moins une autre couche poreuse disposée entre la plaque à membrane et la couche de séparation.

7. Station d'épuration selon l'une des revendications précédentes, **caractérisée en ce que** la céramique poreuse de la plaque à membrane présente des pores d'un diamètre compris entre 500 nm et 3 µm.

8. Station d'épuration selon l'une des revendications précédentes, **caractérisée en ce que** la couche de séparation présente des pores d'un diamètre compris entre 50 nm et 300 nm et de façon particulièrement préférable entre 200 nm et 300 nm.

9. Station d'épuration selon l'une des revendications précédentes, **caractérisée en ce que** la distance entre les au moins deux plaques à membrane disposées essentiellement en parallèle est essentiellement partout la même.

10. Station d'épuration selon l'une des revendications précédentes, **caractérisée en ce que** la plaque à membrane présente une épaisseur comprise entre 0,5 mm et 10 mm et en particulier d'environ 6 mm.

11. Procédé d'épuration d'eau usée dans une station d'épuration, comprenant une épuration biologique de l'eau usée par des microorganismes dans au moins un bassin à boues activées et une décantation secondaire de l'eau usée dans au moins un bassin de décantation, les microorganismes étant séparés à l'aide d'une station d'épuration selon l'une des revendications précédentes.
